# EUROPEAN PATENT SPECIFICATION

(11) **EP 1 569 064 B1**
(45) Date of publication and mention of the grant of the patent: **04.04.2007**
(21) Application number: 04251095.8
(22) Date of filing: 26.02.2004
(51) Int. Cl.: G06F 21/20

(54) **Computing device with environment aware features**
Umgebungsbewusster Computer
Ordinateur ayant des caractéristiques dépendantes de l'environnement

(43) Date of publication of application: 31.08.2005
(60) Divisional application: 06123000.9
(73) Proprietor: Research In Motion Limited, Waterloo, Ontario N2L 3W8 (CA)
(72) Inventor: Chui, Denny, Kitchener Ontario N2N 2Z1 (CA); Hassan, Ahmed E., Waterloo Ontario N2J 4T3 (CA); Wilson, John F., Waterloo Ontario N2K 4A6 (CA)
(74) Representative: Rickard, David John

(56) References cited:
- EP-A- 1 220 552
- EP-A- 1 338 968
- WO-A-00/72150
- WO-A-03/094428
- US-A1- 2002 068 562
- US-A1- 2003 003 909

## Description

The present invention relates to computing devices that are used in changing environments.

The versatility of and uses for mobile electronic devices, and in particular such devices that are processor based and enabled for wireless communications, continue to expand. In many cases, utility features or mechanisms that are applied to mobile communications devices are often just substantial copies of those applied to conventional desktop computers. In such cases, the utility features do not take into consideration or take advantage of the aspects of mobile communications devices that are unique over stationary desktop devices. For example, password locking mechanisms on mobile communications devices such as handheld devices are substantially just a copy of the password locking mechanism used by a desktop, wherein the handheld device will lock up if it has not received an input from the user for a configurable amount of time. For example, if the mobile device keyboard has not been used for 30 minutes, it will lock up and the user will have to enter a password or special key combination to unlock it. Such a locking mechanism fails to exploit the differences between a mobile device and a stationary desktop computer.

WO00/72150 discloses a computer interface utilizing a sensor for sensing that a user is in the immediate vicinity of the computer. The interface consists of a motion sensor, computer software for enabling the computer security in the absence or presence of a user, a keyboard interface connected to the motion sensor and a keyboard connected to the keyboard interface.

WO03/094428 discloses a method for operating an end user unit including operating a screensaver on the end user unit and embedding event-related data into an output of the screensaver so as to maintain an operation of the screensaver.

There is a need for utility features for mobile communications devices that take advantage of the unique aspects of mobile devices to provide increased convenience for the user of the device and/or increased security. For example, a device locking mechanism designed for use in the mobile environment is desired, as are other mechanisms.

### GENERAL

According to various example embodiments of the invention, utility features of a computing device, such as a password based locking mechanism or a mail filtering mechanism, are configured to automatically adjust based on the environment of the computing device.

According to one example aspect, an electronic device that comprises a processor, an output device connected to the processor for issuing a stimulus to a user of the device, at least one input device connected to the processor and responsive to user input activity, and a device lock module associated with the processor for (i) implementing restrictions on user access to the device if user input activity falls below a threshold; and (ii) redetermining the threshold if a stimulus is issued by the output device.

According to another example embodiment, a method for providing security for a mobile communications device, comprising steps of: monitoring for predetermined user interaction with the mobile communications device; locking the mobile communications device if the predetermined user interaction is not detected within a predetermined lockout time interval; and resetting the lockout time interval to a shorter value if a user stimulus is issued by the mobile communications device.

Other aspects and features of the present invention will become apparent to those ordinarily skilled in the art upon review of the following description of specific embodiments of the invention in conjunction with the accompanying Figures.

### BRIEF DESCRIPTION OF THE DRAWINGS

Embodiments of the invention will now be described, by way of example only, with reference to the attached Figures, wherein:

Figure 1 is a block diagram showing a communications system including a mobile communications device to which the present invention may be applied;

Figure 2 is a flow diagram of a device lock process taken at the mobile communications device according to embodiments of the invention;

Figure 3 is a flow diagram of a further device lock process taken at the mobile communications device according to embodiments of the invention; and

Figure 4 is a flow diagram of another device lock process taken at the mobile communications device according to embodiments of the invention.

Like reference numerals are used throughout the Figures to denote similar elements and features.

### DESCRIPTION OF PREFERRED EMBODIMENTS

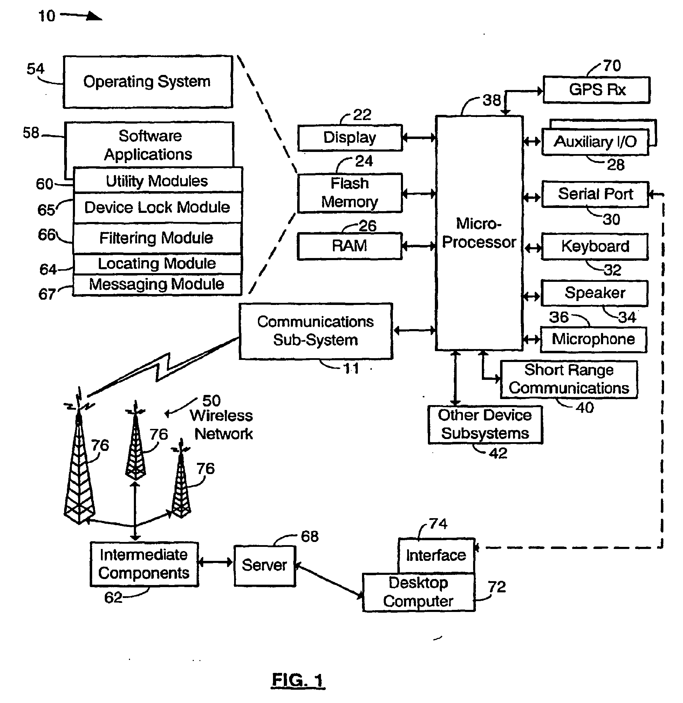

Referring now to the drawings, Figure 1 is a block diagram of a mobile communication device 10 to which the invention is applied in an example embodiment. In an example embodiment, the mobile communication device 10 is a two-way communication device having at least data and, in some cases, also voice communication capabilities. In the example embodiment, the device 10 has the capability to communicate with other computer systems on the Internet. Depending on the functionality provided by the device, in various embodiments the device may be a data communication device, a multiple-mode communication device configured for both data and voice communication, a mobile telephone, a PDA (personal digital assistant) enabled for wireless communication, a PDA not enabled for wireless communication, or a computer system with or without a wireless modem, among other things.

The device 10 includes a communication subsystem 11 for exchanging signals with a wireless communication network 50. As will be apparent to those skilled in the field of communications, the particular design of the communication subsystem 11 will be dependent upon the communication network in which the device 10 is intended to operate.

The device 10 includes a microprocessor 38 that controls the overall operation of the device. The microprocessor 38 interacts with communications subsystem 11 and also interacts with further device subsystems such as the display 22, flash memory 24, random access memory (RAM) 26, auxiliary input/output (I/O) subsystems 28 (such as a thumbwheel or a vibration actuator, for example), serial port 30, keyboard or keypad 32, speaker 34, microphone 36, short-range communications subsystem 40, global Positioning System receiver (GPS Rx) 70 and any other device subsystems generally designated as 42.

Some of the subsystems shown in Fig. 1 perform communication-related functions, whereas other subsystems may provide "resident" or on-device functions. Notably, some subsystems, such as keyboard 32 and display 22 for example, may be used for both communication-related functions, such as entering a text message for transmission over a communication network, and device-resident functions such as a calculator or task list.

Operating system software 54 and various software applications 58 used by the microprocessor 38 are, in one example embodiment, stored in a persistent store such as flash memory 24 or similar storage element. Those skilled in the art will appreciate that the operating system 54, specific device applications 58, or parts thereof, may be temporarily loaded into a volatile store such as RAM 26. It is contemplated that received communication signals may also be stored to RAM 26.

The microprocessor 38, in addition to its operating system functions, preferably enables execution of software applications 58 on the device. A predetermined set of applications 58 which control basic device operations, including at least data and voice communication applications for example, will normally be installed on the device 10 during manufacture. Further applications may also be loaded onto the device 10 through the network 50, an auxiliary I/O subsystem 28, serial port 30, short-range communications subsystem 40 or any other suitable subsystem 42, and installed by a user in the RAM 26 or a nonvolatile store for execution by the microprocessor 38. Such flexibility in application installation increases the functionality of the device and may provide enhanced on-device functions, communication-related functions, or both. For example, secure communication applications may enable electronic commerce functions and other such financial transactions to be performed using the device 10.

In a data communication mode, a received signal such as a text message or web page download will be processed by the communication subsystem 11 and input to the microprocessor 38, which will preferably further process the received signal for output to the display 22, or alternatively to an auxiliary I/O device 28. A user of device 10 may also compose data items such as email messages for example, using the keyboard 32 in conjunction with the display 22 and possibly an auxiliary I/O device 28. Such composed items may then be transmitted over a communication network through the communication subsystem 11.

In some embodiments, for example in a personal digital assistant (PDA)-type communication device, the serial port 30 in Figure 1 may be used to permit synchronization with a user's desktop computer 72. Such a port 30 would enable a user to set preferences through an external device or software application and would extend the capabilities of the device by providing for information or software downloads to the device 10 or uploads from the device 10 other than through a wireless communication network.

A short-range communications subsystem 40 is a further component which may provide for communication between the device 10 and different systems or devices, which need not necessarily be similar devices. For example, the subsystem 40 may include an infrared device and associated circuits and components or a Bluetooth^{™} communication module to provide for communication with similarly enabled systems and devices. The device 10 may be a handheld device.

In some example embodiments, the device 10 includes a GPS receiver 70 for receiving location information from GPS satellites, thus enabling the device 10 to track its current location with a great deal of accuracy.

Wireless mobile network 50 is, in an example embodiment, a wireless packet data network, (e.g. Mobitex^{™} or DataTAC^{™}), which provides radio coverage to mobile devices 10. Among other things, wireless mobile network 50 may also be a voice and data network such as GSM (Global System for Mobile Communication) and GPRS (General Packet Radio System), CDMA (Code Division Multiple Access), or various other third generation networks such as EDGE (Enhanced Data rates for GSM Evolution) or UMTS (Universal Mobile Telecommunications Systems).

In one example embodiment, the wireless network 50 is connected through one or more intermediate components 62 to one or more servers 68, which may be mail servers and/or access points for an intranet, the Internet, and/or other networks. Intermediate components 62 may include one or more gateways and/or connector systems as required to facilitate communications through the wireless network 50 with a plurality of mobile devices 10. The configuration of intermediate components 62 will depend on the desired functionality of the communications system and the type of wireless network 50, among other things.

In an example embodiment, among the software applications resident on the device 10 are one or more utility applications or modules 60. In various embodiments, utility applications may be stand alone applications, or may be sub-applications included as part of one or more larger software applications, or may be sub-applications integrated into operating system 54.

In an example embodiment, one of the utility applications is a device lock application or module 65 for locking the input and output interfaces of the mobile device 10 upon the occurrence of one or more predetermined conditions. Once the device has been locked, the user must enter a password to unlock it. As known in the art, device lock mechanisms are used to prevent unauthorized access, and typically can either be manually triggered by the user (for example, by using the "Lock Computer" function in Microsoft^{™} Windows^{™}) or automatically triggered by a period of mouse/keyboard inactivity for a user configured time period. Unlike conventional device lock mechanisms, according to example embodiments, the device lock module 85 of the present invention automatically adapts its device lock behaviour based on the environment of the device 10.

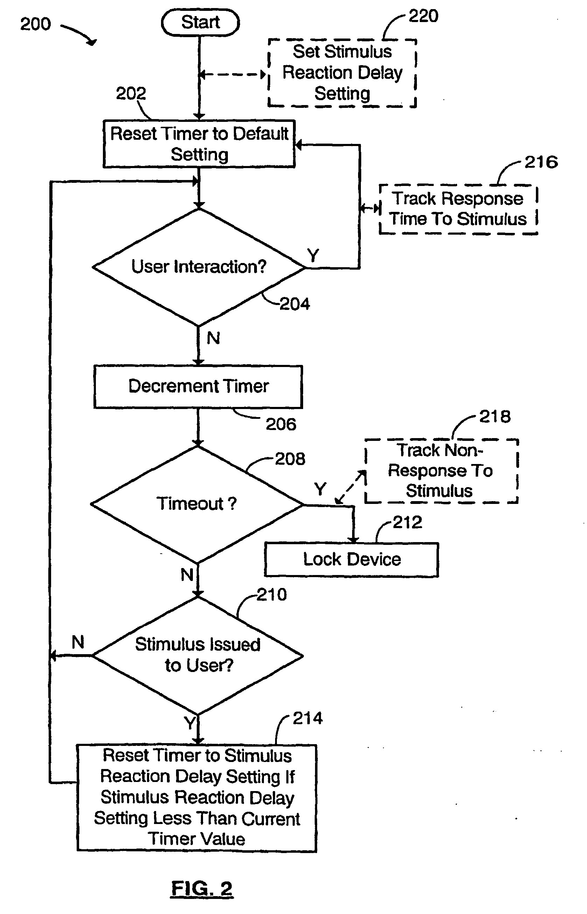

Figure 2 shows an example device lock process, shown generally by reference 200, and performed by the device 10 when microprocessor 38 executes instructions to implement the device lock module 65. The device lock process 200 is a context aware process in that the timing of the locking action depends on user activity or lack thereof in response to a stimulus. The device lock process 200 attempts to distinguish between two different cases where a mobile communications device has not been subjected to any user actions for a duration of time. In one case, the device is not being used because the user is not close to it - in such a case it is desirable to lock the device as quickly as possible as it may be in an unsecured setting and thus require a high degree of security protection. In the alternative case, the device is in the immediate possession or proximity of the user, however the device is not being used because the user has had no need or desire to use it - for example, the user has not been prompted by any new emails, messages, phone calls or calendar reminders and has not sent any emails or made any phone calls or otherwise interacted with the device 10. In this alternative case, the device 10 is presumably in a safe setting with the user and an immediate device lock is not required.

By distinguishing between the above two cases, a device lock mechanism that balances convenience and security can be provided. For example, in a device lock mechanism that does not distinguish between the two cases, greater security can be provided by always locking a device after a relatively short period of user inactivity; however such locking can be inconvenient and unnecessary when the user of the device is right next to it. In order to distinguish between the two cases, according to aspects of the present invention an assumption is made that a user of a device will generally respond and interact with the device when issued a stimulus. For example, events on the device such as an incoming phone call or a new email or a calendar reminder will typically be accompanied by a stimulus such as an audible sound such as a beep or a physical prompt such as a vibration, and if the user is close to or wearing the device he or she will generally interact with it shortly after receiving the stimulus. Thus, the process 200 assumes that if the user does not react to a stimulus then the device 10 is not near the user. Based on such assumption, the device lock process 200 is configured to use a shorter timeout setting for locking the device after a stimulus is issued than is used if a stimulus is not issued.

As indicated in Figure 2, the process 200 starts by setting a device lock timeout counter or timer to be equal to a predetermined default timeout value (step 202). The default timeout value is user configurable in an example embodiment - by way of non-limiting example it may be 30 minutes or such other value as the user deems appropriate or as is set automatically when the lock-out module 65 is configured or installed on the device 10. As indicated in step 204, the process 200 checks to see if the user has interacted with the device. The user interaction could for example include, among other things, pressing one or more keys on a keyboard or keypad, pressing or rotating an auxiliary input device 28 such as a thumbwheel, pressing a touch-screen, pressing a touchpad, moving a joystick, or otherwise activating any other form of user input mechanism of the device 10.

If a user input is detected in step 204, the process 200 determines that there is no need to lock the device, and returns to step 202 to reset the device lock timer back to the default timeout value. In the event that no user input is detected in step 204, the device lock timer is decremented (step 206), and then a check is done to determine if time has run out on the device lock timer (step 208). In the event that a timeout has occurred, the device 10 is locked (step 212). Locking of the device 10 will generally prevent anyone from viewing any files, messages or any other information that is stored on the locked device, as well as preventing any email or other messages from being composed or sent, and/or phone calls from being made from the device (except, in some embodiments selected calls such as 911 emergency calls for example may still be permitted from a locked device). Locking of the device 10 effectively prevents the user from entering information into or extracting information out of the device, other than to enter a password or provide some other predetermined user input in order to unlock the device.

Turning again to step 208, in the event that the device lock timer has not run out of time, a check is done to determine if a user stimulus has recently been issued by the mobile device 10. A user stimulus includes attempts by the device 10 to get the attention of a user that may not be currently looking at the device, and in an example embodiment, the user stimulus includes, for example, an audible prompt such as a beep or ring, or a physical prompt such as a vibration. Such prompts may be issued by other applications running on the mobile device 10 for a variety of reasons - for example, stimuli may be issued in response to a new incoming email or other message received over wireless network 50, to announce an incoming phone call or a page, or to issue a reminder of an event scheduled in a calendar-type or to-do-list type of application. If no stimulus has been issued to the user, the process 200 loops back to step 204 and repeats steps 204-210 as set out above. If, however, a stimulus has been issued to the user, the timeout timer is set to a new time out value, namely a "stimulus reaction delay" setting value (step 214) prior to looping back to step 204. In an example embodiment, the timeout timer is only set to the stimulus reaction delay setting in the event that the stimulus reaction delay setting is less than the current amount of time remaining in the countdown to device lock. The reaction delay setting will typically be a much smaller value than the default starting value for the timeout timer - for example it could be between a few seconds to 5 minutes, by way of non-limiting example, compared to 30 minutes to an hour for the default value.

Thus, the process 200 effectively provides for at least two time-out settings for the time-out timer, a default setting and a shorter stimulus reaction delay setting. The time-out setting is initially set to the default setting, and starts counting down until either a user interaction with the device 10 occurs, in which case the countdown timer is reset, or until the timer runs out of time, in which case the device locks. In this sense, the device lock process 200 is similar to a traditional lock process. However, unlike in a traditional lock out process, according to embodiments of the current invention if during the lock device timer countdown, an audio or physical stimulus is provided to the user, the timer is reset to the shorter reaction delay setting (assuming that the reaction delay setting is less than the current remaining time on the timer). The user must then interact with the device within the time provided by the shorter reaction delay setting, otherwise the device 10 will lock. It will be appreciated that the steps shown in Figure 2 need not necessarily all be performed in the exact order shown to achieve the desired result.

Such a device lock configuration can provide an improved level of security for data on the device for some users, as the user stimulus that accompanies such events as newly arrived data is effectively used to monitor the proximity of the user to the mobile device such that the device can be quickly locked if a determination is made that the user is not near the device. The presence of such a feature may give the user the comfort level to extend the length of time for the default time-out setting, thereby decreasing the number of unnecessary lockouts and increasing convenience to the user.

In an example embodiment, the stimulus reaction delay setting used in process 200 is installed on the device as a preset value that is user configurable. In some example embodiments, the stimulus reaction delay setting can be automatically and adaptively set by the device 10 based on user response characteristics. For example, some users may take only a few seconds to react to a stimulus, whereas other users may habitually take longer time periods such as a few minutes on average - in example embodiments, the stimulus reaction delay setting on a device 10 is periodically adjusted based on the response time of the user of the device. Figure 2 includes in phantom blocks 216, 218 and 220 some steps that are added to process 200 in an example embodiment to effect automatic adaptive adjustment of the stimulus reaction delay setting. As indicated in step 216, the response times are stored and tracked whenever a user successfully responds to a stimulus, and as indicated in step 218, a lack of user response to a stimulus that leads to a device lock is also tracked. The process 200 includes a sub-process 220 that uses the values tracked and stored in steps 216 and 218 to adjust the stimulus reaction delay setting based on the tracked response times and non-response times of the user of the device. In various embodiments, the stimulus reaction delay setting may, among other things, be adjusted each time the process 200 is started, may be adjusted at set time intervals, may be adjusted when a threshold amount of response time data has been collected since a previous adjustment, and/or may be adjusted when the tracked values fall outside of predetermined boundaries relative to the current stimulus reaction delay setting. In some embodiments, the user may be prompted to determine if they want to accept an adjusted value as the new stimulus reaction delay setting, or the setting may alternatively be changed without requiring approval from the user.

Although as noted above the stimulus issued to the user in step 210 will generally includes a non-visual component such as an audio sound and/or a physical stimulus, in some embodiments the only stimulus issued may be a visual stimulus on display 22, for example. In some embodiments, different stimulus reaction delay settings could selectively be used based on the event triggering the stimulus and/or the type of stimulus provided to the user. For example, one type of stimulus (for example a certain audio signal or vibration pattern) may be used for an incoming phone call, whereas a different stimulus is used for a new email message, with the stimulus reaction delay setting applied in step 214 being shorter for a phone call than for a new email, given that people are more inclined to react quicker to a phone call than an new email message.

Although the process 200 has been described in the context of a mobile device it could alternatively be applied to a desktop computer system as well.

The lock process 200 is based on certain assumptions about how a user will react to a stimulus when the user is near the device, and the device lock process 200 attempts to adjust the device lock function based on an assumed location or proximity of the device 10 relative to its user. In some example embodiments, the device lock module 65 is configured to adjust the device lock function based on other location relevant information concerning the device 10.

In some embodiments, security settings other than or in addition to the device lock countdown timer could be changed depending on a user's reaction to a stimulus. For example, the lock device module 65 could be configured to require different passwords depending on the user's reaction (or lack thereof) - when locking the device in step 212, a determination could be made if the device is being locked subsequent to a user failure to respond to a stimulus, and if so a more complex password be required to unlock the device than would be required if the device lock was occurring for other reasons.

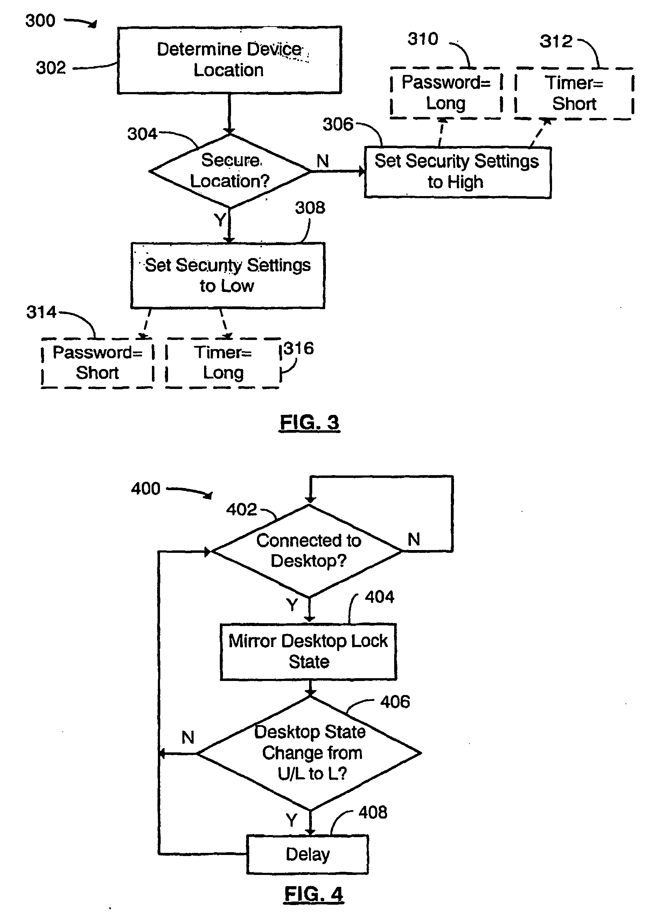

Reference is now made to device lock process 300 of Figure 3. The device lock process 300 is configured to provide different security settings for device locking based on a perceived location of the device 10. For example, if the device 10 is perceived to be in a safe setting, security settings that are less stringent but more convenient to the user are applied. If the device 10 is perceived to be in an insecure setting, security settings that are more stringent but less convenient to the user are applied.

As indicated in step 302, a device location is determined. In one example embodiment, among the software applications 58 resident on the device is a locating module 64 for determining a location of the device. The locating module 64 could be part of the device lock module 65, or could be part of another application, or could be a standalone application, among other things. Depending upon the capabilities of the device 10 and the wireless network within which it operates a location for the device 10 could be determined using a variety of methods of varying accuracy. For example, in one embodiment the locating module 64 tracks the current base station 76 within the wireless network 50 that the device 10 is currently communicating with, and in step 304 the device lock module 65 makes a determination as to whether the device is presently in a secure location or not based on the identity of such base station. In such an embodiment, the device 10 maintains a list of one or more identifiers which identify one or more base stations 76 that are considered to be associated with a safe area for the device 10. For example, the base station near a person's home may be identified as one of the safe base stations. In other embodiments, more accurate locating algorithms are applied by the locating module 64. For example, in a device equipped with a GPS receiver 70, a fairly specific location of the device 10 can be calculated based on received GPS signals. In some embodiments, location may be determined based on communications that occur through the short range communications system 40 of the device 10. For example, in an work or home environment having a wireless LAN or other short range communications system, the device 10 location can be narrowed down to a relatively small area. In some embodiments, a location of the device 10 relative to a user may be deduced based on whether the user responds to a stimulus within a predetermined duration (similar to process 200).

If in step 304 a determination is made that the device 10 is not in a secure location, then, as indicated in step 306, one or more security settings used by the device lock module 65 are set to high security values. For example, the device lock module 65 may be configured to accept different predetermined passwords based on the security settings. In step 310, the security settings are set to require a more complex password to unlock the device 10 than would be required in a safe setting. Additionally or alternatively as indicated in step 312, the countdown timer value used to determine the period of user inactivity after which a device lock will occur is set to a shorter duration that would be used in a safe setting.

As indicated in step 308, in the event that a determination is made in step 304 that the device 10 is in a safe location, security settings for the device can be set to a lower value. For example, as indicated in step 314, a shorter or less complex password could be required to unlock the device, and/or as indicated in step 316, a larger time value could be set for the device lock timer.

Although process 300 as shown in Figure 3 has only two security classification levels branching out from decision block 304, there could actually be three or more classification levels each associated with a different physical location of the device and each having different set of associated security settings - for example, "home" settings for when the device is within a predetermined proximity of the user's home, "work" settings for when the device is within a predetermined proximity of the user's work and "other location" settings for when the device is in other locations.

In some embodiments, the settings used by the device lock module 65 could depend on the location of the device 10 relative to a desktop computer 72. For example, as indicated in Figure 1, in some embodiments the device 10 can communicate through a local interface 74 with a local desktop 72. The interface 74 may for example be a docking station or cradle that physically connects to a serial port 30 or other port of the device 10, or could be a short-range wireless interface for communicating with the short range communications system 40 of the mobile device 10. The device lock module 65 in example embodiments adapts its behaviour depending on whether the device 10 is docked or otherwise in local communication with a desktop computer 72. In this regard, an example process 400 performed by device lock module 65 according to embodiments of the invention is shown in Figure 4. In the embodiment represented by the process 400, the desktop computer 72 is configured to communicate its current lock state (unlocked or locked) to a locally connected mobile device 10, and the mobile device 10 is configured to mirror the lock state of the desktop computer 72.

Process 400 includes a step 402 of monitoring to determine if the device 10 is locally connected through interface 74 to desktop computer 72. If the device 10 is locally connected to the desktop computer 72, then the lock state of the device 10 is set to be the same as that of the desktop computer (step 404). As indicated in step 406, the device lock module 65 monitors for a change in the lock state of the desktop computer 72 from unlocked (U/L) to locked (L). If the desktop lock state has not changed from unlocked to locked, the device lock module continues to check to see if the device 10 is still locally connected to the desktop computer 72 and if so maintain the device 10 in the same lock state as desktop computer 72. If, however, in step 406 a change in the lock state of the desktop computer 72 from unlocked to locked is detected, then a preset time delay occurs (step 408) after which a determination is made if the mobile device 10 is still locally connected to the desktop computer 72 (step 402), and if so, then the mobile device 10 will also lock up (step 404). The delay in step 408, which may by way of non-limiting example be in the range of a few seconds to a few minutes, is provided to allow a user time to lock their desktop computer and then remove their mobile device 10 from its docking station (thereby severing the local connection with desktop computer 72). If the user does not remove their mobile device 10 from its docking station within the delay provided in step 408, an assumption is made that the user is leaving or has left the device 10 unattended with the desktop computer 72 and so it is then immediately locked. In a further example embodiment, as part of delay step 408, a question to the user is displayed in a user interface window on the mobile device 10 asking if the user wants to lock the device. If the user does not reply within the delay time confirming that the device should not be locked, then the process continues to step 402 and will lock the mobile device if it is still connected to the desktop. If, however, the user confirms within the delay time that they do not want the mobile device locked, then the mobile device will ignore the locked state of the desktop and rely on its own internal device lock timer instead.

It will be appreciated that processes 200, 300 and 400 can in various embodiments be performed independently of each other, or in some embodiments can be combined and either performed in parallel with each other or sequentially with each other. For example, in process 300 the security settings set based on device location could include the timer default value used in step 202 of process 200 and/or the stimulus reaction delay value used in step 214. Although the above description has focussed on adoption of settings for a device lock process, settings for other applications on the device 10 could also be adaptively configured based on perceived or actual changes in the real or relative position of the mobile device 10. For example, in various example embodiments, the mobile device 10 includes among software applications 58 an instant messaging module 67 and/or an email filtering module 66. In an example embodiment, the general status setting used by the instant messaging module 67 is set automatically based on a determined location of the device 10 - for example status settings of "user is home"; "user is at work"; or "user is away, etc. could be automatically selected based on device location. Similarly, email filter settings associated with filtering module 66 are automatically adapted to apply different filtering criteria based on device location - for example, the filter settings in a user home location may be designed to filter out notifications for work-related emails. In the case of adaptive instant messaging and email filtering, the changes in settings or user location need not be communicated to an external server, thus ensuring the user privacy is not a concern.

The above-described embodiments of the present invention are intended to be examples only. Alterations, modifications and variations may be effected to the particular embodiments by those skilled in the art without departing from the scope of the invention, which is defined by the claims appended hereto.

## Claims

1. An electronic device (10), comprising a processor (38) an output device (28, 34) connected to the processor (38) for issuing a stimulus to a user of the electronic device (10); at least one input device (28, 32) connected to the processor (38) and responsive to user interaction; wherein said electronic device (10) has a device lock module (65) associated with the processor (38) for implementing restrictions on user access to the electronic device (10) if user interaction is not detected within a predetermined lockout-time interval, **characterised in that**:
the device lock module (65) is configured for resetting the lockout-time interval into a shorter value if a user stimulus is issued by the output device (28, 34).

2. The electronic device (10) of claim 1 wherein the device lock module (65) is configured for resetting the lockout-time interval into a shorter value if a user stimulus is issued by the output device (28, 34) within the predetermined lockout-time interval.

3. The electronic device (10) of claim 2 wherein the device lock module (65) is configured for setting an initial value for the predetermined lockout-time interval; monitoring for user interaction within the predetermined lockout-time interval and if user interaction is not detected within the predetermined lockout-time interval then implementing the restrictions on user access; and monitoring for issuance of the stimulus within the predetermined lockout-time interval and if the stimulus is issued during the predetermined lockout-time interval, resetting a time remaining in the predetermined lockout-time interval to a second value less than the initial value.

4. The electronic device (10) of claim 3 wherein the device lock module (65) is configured such that, if the user stimulus is issued during the predetermined lockout-time interval, then the time remaining in the predetermined lockout-time interval is reset to the second value only when the time remaining in the predetermined lockout-time interval when the user stimulus is issued exceeds the second value.

5. The electronic device (10) of claim 3 or claim 4 wherein the device lock module (65) is configured for tracking user response times to issue user stimuli and adjusting the second value based on the tracked user response times.

6. The electronic device (10) of any one of claims 1 to 5 wherein the user stimulus comprises an aural stimulus and/or a physical stimulus.

7. The electronic device (10) of any one of claims 1 to 6 wherein the electronic device is a mobile communications device enabled for communications over a wireless network (50), and the processor (38) is configured for causing the output device (28, 34) to issue the user stimulus when the electronic device (10) receives a new communication addressed to it over the wireless network (50), the new communication comprising an electronic message or an incoming telephone call.

8. The electronic device (10) of any one of claims 1 to 7 wherein the electronic device (10) comprises an event scheduling application (58) associated with the processor (38) for generating event reminders, the processor (38) being configured for causing the output device (28, 34) to issue the user stimulus when an event reminder is generated.

9. The electronic device (10) of any one of claims 1 to 8 wherein the output device (28, 34) is configured to issue user stimuli for at least two different types of events and the device lock module (65) is configured to reset the lockout-time interval based on the type of event for which the user stimulus is issued.

10. A method for providing security for a mobile communications device (10), comprising steps of monitoring for predetermined user interaction with the mobile communications device (10); and locking the mobile communications device if the predetermined user interaction is not detected within a predetermined lockout time interval**, characterised in that**:
the method further comprises the step of resetting the lockout time interval to a shorter value if a user stimulus is issued by the mobile communications device (10).

11. The method of claim 10 wherein the resetting step is performed based on whether a time remaining in the lockout time interval is greater than the shorter value.

12. The method of claim 10 or claim 11 comprising monitoring for new communications received by the mobile communications device and issuing the user stimulus in response to receiving a new communication at the mobile communications device.

13. The method of any one of claims 10 to 12 comprising monitoring a length of time for user interaction to occur after the user stimulus has been issued and adjusting the shorter value based thereon.

14. A communication system comprising a wireless network (50) and a plurality of electronic devices (10) according to any one of claims 1 to 9, said electronic devices (10) being capable of communicating wirelessly with the wireless network (50).

15. A computer readable medium (24, 26) embodying software code executable by a processor (38) of an electronic device (10) for implementing the method of any one of claims 10 to 13.

## Patentansprüche

1. Elektronisches Gerät (10), umfassend einen Prozessor (38); ein Ausgabegerät (28, 34), das mit dem Prozessor (38) verbunden ist, zum Ausgeben eines Stimulus an einen Benutzer des elektronischen Geräts (10); mindestens ein Eingabegerät (28, 32), das mit dem Prozessor (38) verbunden ist und auf Benutzerinteraktion reagiert; wobei das elektronische Gerät (10) ein zum Prozessor (38) gehörendes Gerätesperrmodul (65) hat, das zum Implementieren von Einschränkungen in Bezug auf den Benutzerzugriff auf das elektronische Gerät (10) dient, wenn die Benutzerinteraktion nicht innerhalb eines vorgegebenen Sperrungszeitintervalls erkannt wird, **dadurch gekennzeichnet, dass** das Gerätesperrmodul (65) konfiguriert ist zum Zurücksetzen des Sperrungszeitintervalls auf einen kürzeren Wert, wenn durch das Ausgabegerät (28, 34) ein Benutzerstimulus ausgegeben wird.

2. Elektronisches Gerät (10) gemäß Anspruch 1, wobei das Gerätesperrmodul (65) zum Zurücksetzen des Sperrungszeitintervalls auf einen kürzeren Wert konfiguriert ist, wenn durch das Ausgabegerät (28, 34) innerhalb des vorgegebenen Sperrungszeitintervalls ein Benutzerstimulus ausgegeben wird.

3. Elektronisches Gerät (10) gemäß Anspruch 2, wobei das Gerätesperrmodul (65) konfiguriert ist zum Festlegen eines Initialwerts für das vorgegebene Sperrungszeitintervall; zum Überwachen auf Benutzerinteraktion innerhalb des vorgegebenen Sperrungszeitintervalls, und beim Nichterkennen von Benutzerinteraktion innerhalb des vorgegebenen Sperrungszeitintervalls zum anschließenden Implementieren der Einschränkungen in Bezug auf den Benutzerzugriff; und zum Überwachen auf die Ausgabe des Stimulus innerhalb des vorgegebenen Sperrungszeitintervalls, und bei Ausgabe des Stimulus innerhalb des vorgegebenen Sperrungszeitintervalls zum Zurücksetzen einer im vorgegebenen Sperrungszeitintervall verbleibenden Zeit auf einen zweiten Wert, der geringer ist als der Initialwert.

4. Elektronisches Gerät (10) gemäß Anspruch 3, wobei das Gerätesperrmodul (65) so konfiguriert ist, dass es, wenn der Benutzerstimulus während des vorgegebenen Sperrungszeitintervalls ausgegeben wird, die im vorgegebenen Sperrungszeitintervall verbleibende Zeit nur dann auf den zweiten Wert zurückgesetzt wird, wenn die im vorgegebenen Sperrungszeitintervall verbleibende Zeit zum Zeitpunkt der Ausgabe des Benutzerstimulus den zweiten Wert übersteigt.

5. Elektronisches Gerät (10) gemäß Anspruch 3 oder Anspruch 4, wobei das Gerätesperrmodul (65) konfiguriert ist zum Verfolgen der Benutzerreaktionszeiten auf die Ausgabe von Benutzerstimuli und zum Anpassen des zweiten Werts auf der Basis der verfolgten Benutzerreaktionszeiten.

6. Elektronisches Gerät (10) gemäß jedem der Ansprüche 1 bis 5, wobei der Benutzerstimulus einen akustischen Stimulus und/oder einen physischen Stimulus umfasst.

7. Elektronisches Gerät (10) gemäß jedem der Ansprüche 1 bis 6, wobei das elektronische Gerät ein mobiles Kommunikationsgerät ist, das zur Kommunikation über ein Drahtlosnetz (50) in der Lage ist, und der Prozessor (38) so konfiguriert ist, dass er das Ausgabegerät (28, 34) dazu bringt, den Benutzerstimulus auszugeben, wenn das elektronische Gerät (10) eine neue an es adressierte Kommunikation über das Drahtlosnetz (50) empfängt, wobei die neue Kommunikation eine elektronische Nachricht oder einen eingehenden Telefonanruf umfasst.

8. Elektronisches Gerät (10) gemäß jedem der Ansprüche 1 bis 7, wobei das elektronische Gerät (10) eine zum Prozessor (38) gehörende Ereignisplanungsanwendung (58) zum Erzeugen von Ereigniserinnerungen umfasst und der Prozessor (38) so konfiguriert ist, dass er das Ausgabegerät (28, 34) dazu bringt, den Benutzerstimulus auszugeben, wenn eine Ereigniserinnerung erzeugt wird.

9. Elektronisches Gerät (10) gemäß jedem der Ansprüche 1 bis 8, wobei das Ausgabegerät (28, 34) konfiguriert ist zum Ausgeben von Benutzerstimuli für mindestens zwei unterschiedliche Typen von Ereignissen und das Gerätesperrmodul (65) konfiguriert ist zum Zurücksetzen des Sperrungszeitintervalls basierend auf dem Typ des Ereignisses, für den der Benutzerstimulus ausgegeben wird.

10. Verfahren zum Bereitstellen von Sicherheit für ein mobiles Kommunikationsgerät (10), umfassend die Schritte des Überwachens auf vorgegebene Benutzerinteraktion mit dem mobilen Kommunikationsgerät (10) und des Sperrens des mobilen Kommunikationsgeräts, wenn die vorgegebene Benutzerinteraktion nicht innerhalb eines vorgegebenen Sperrungszeitintervalls erkannt wird, **dadurch gekennzeichnet, dass** das Verfahren des Weiteren den Schritt des Zurücksetzens des Sperrungszeitintervalls auf einen kürzeren Wert umfasst, wenn durch das mobile Kommunikationsgerät (10) ein Benutzerstimulus ausgegeben wird.

11. Verfahren gemäß Anspruch 10, wobei der Schritt des Zurücksetzens basierend darauf durchgeführt wird, ob eine im Sperrungszeitintervall verbleibende Zeit größer ist als der kürzere Wert.

12. Verfahren gemäß Anspruch 10 oder Anspruch 11, umfassend das Überwachen auf neue Kommunikationen, die vom mobilen Kommunikationsgerät empfangen werden, und das Ausgeben des Benutzerstimulus als Reaktion auf das Empfangen einer neuen Kommunikation am mobilen Kommunikationsgerät.

13. Verfahren gemäß jedem der Ansprüche 10 bis 12, umfassend das Überwachen über eine Zeitdauer, ob Benutzerinteraktion erfolgt, nachdem der Benutzerstimulus ausgegeben wurde, und das Anpassen des kürzeren Werts auf dieser Basis.

14. Kommunikationssystem, umfassend ein Drahtlosnetz (50) und eine Vielzahl von elektronischen Geräten (10) gemäß jedem der Ansprüche 1 bis 9, wobei die elektronischen Geräte (10) in der Lage sind, drahtlos mit dem Drahtlosnetzwerk (50) zu kommunizieren.

15. Computerlesbares Medium (24, 26) zur Verkörperung von Softwarecode, der durch einen Prozessor (38) eines elektronischen Geräts (10) ausführbar ist, um das Verfahren gemäß jedem der Ansprüche 10 bis 13 zu implementieren.

## Revendications

1. Un dispositif électronique (10), comprenant un processeur (38), un dispositif de sortie (28, 34) connecté au processeur (38) destiné à envoyer un stimulus à un utilisateur du dispositif électronique (10), au moins un dispositif d'entrée (28, 37) connecté au processeur (38) et réactif à une interaction de l'utilisateur, où ledit dispositif électronique (10) possède un module de verrouillage du dispositif (65) associé au processeur (38) pour mettre en oeuvre des restrictions relatives à l'accès utilisateur au dispositif électronique (10) si une interaction de l'utilisateur n'est pas détectée dans un intervalle de temps de verrouillage prédéterminé, **caractérisé par le fait que** :
le module de verrouillage du dispositif (65) est configuré pour redéfinir l'intervalle de temps de verrouillage sur une valeur plus faible si un stimulus utilisateur est envoyé par le dispositif de sortie (28, 34).

2. Le dispositif électronique (10) selon la Revendication 1 où le module de verrouillage du dispositif (65) est configuré pour redéfinir l'intervalle de temps de verrouillage sur une valeur plus faible si un stimulus utilisateur est envoyé par le dispositif de sortie (28, 34) dans l'intervalle de temps de verrouillage prédéterminé.

3. Le dispositif électronique (10) selon la Revendication 2 où le module de verrouillage du dispositif (65) est configuré pour définir une valeur initiale de l'intervalle de temps de verrouillage prédéterminé, pour surveiller l'interaction de l'utilisateur au cours de l'intervalle de temps de verrouillage prédéterminé et si une interaction de l'utilisateur n'est pas détectée au cours de l'intervalle de temps de verrouillage prédéterminé, alors pour mettre en oeuvre les restrictions relatives à l'accès utilisateur et pour surveiller l'envoi du stimulus au cours de l'intervalle de temps de verrouillage prédéterminé et si le stimulus est envoyé au cours de l'intervalle de temps de verrouillage prédéterminé, pour redéfinir une durée restante dans l'intervalle de temps de verrouillage prédéterminé sur une deuxième valeur inférieure à la valeur initiale.

4. Le dispositif électronique (10) selon la Revendication 3 où le module de verrouillage du dispositif (65) est configuré de telle façon que, si le stimulus utilisateur est envoyé au cours de l'intervalle de temps de verrouillage prédéterminé, alors la durée restante dans l'intervalle de temps de verrouillage prédéterminé est redéfinie sur la deuxième valeur uniquement si la durée restante dans l'intervalle de temps de verrouillage prédéterminé lorsque le stimulus utilisateur est envoyé dépasse la deuxième valeur.

5. Le dispositif électronique (10) selon la Revendication 3 ou la Revendication 4 où le module de verrouillage du dispositif (65) est configuré pour observer les temps de réponse de l'utilisateur afin d'envoyer des stimuli utilisateur et pour ajuster la deuxième valeur en fonction des temps de réponse de l'utilisateur observés.

6. Le dispositif électronique (10) selon l'une quelconque des Revendications 1 à 5 où le stimulus utilisateur comprend un stimulus sonore et/ou un stimulus physique.

7. Le dispositif électronique (10) selon l'une quelconque des Revendications 1 à 6 où le dispositif électronique est un dispositif de communication mobile activé pour communiquer par un réseau sans fil (50), et le processeur (38) est configuré pour amener le dispositif de sortie (28, 34) à envoyer le stimulus utilisateur lorsque le dispositif électronique (10) reçoit une nouvelle communication qui lui est adressée par le réseau sans fil (50), la nouvelle communication contenant un message électronique ou un appel téléphonique entrant.

8. Le dispositif électronique (10) selon l'une quelconque des Revendications 1 à 7 où le dispositif électronique (10) comprend une application de planification d'événements (58) associée au processeur (38) pour générer des rappels d'événements, le processeur (38) étant configuré pour amener le dispositif de sortie (28, 34) à envoyer le stimulus utilisateur lorsqu'un rappel d'événement est généré.

9. Le dispositif électronique (10) selon l'une quelconque des Revendications 1 à 8 où le dispositif de sortie (28, 34) est configuré pour envoyer les stimuli utilisateur pour au moins deux types différents d'événements et le module de verrouillage du dispositif (65) est configuré pour redéfinir l'intervalle de temps de verrouillage en fonction du type d'événement pour lequel le stimulus utilisateur a été envoyé.

10. Un procédé destiné à fournir une sécurité à un dispositif de communication mobile (10) comprenant les opérations suivantes : surveiller la détection d'une interaction utilisateur prédéterminée avec le dispositif de communication mobile (10) et verrouiller le dispositif de communication mobile si l'interaction utilisateur prédéterminée n'est pas détectée au cours d'un intervalle de temps de verrouillage prédéterminé, **caractérisé par le fait que** :
le procédé comprend en outre l'opération de redéfinition de l'intervalle de temps de verrouillage sur une valeur plus faible si un stimulus utilisateur est envoyé par le dispositif de communication mobile (10).

11. Le procédé selon la Revendication 10 où l'opération de redéfinition est exécutée si une durée restante dans l'intervalle de temps de verrouillage est supérieure à la valeur plus faible.

12. Le procédé selon la Revendication 10 ou la Revendication 11 comprenant la surveillance de nouvelles communications reçues par le dispositif de communication mobile et l'envoi du stimulus utilisateur en réponse à la réception d'une nouvelle communication sur le dispositif de communication mobile.

13. Le procédé selon l'une quelconque des Revendications 10 à 12 comprenant la surveillance d'un laps de temps dans l'attente qu'une interaction utilisateur se produise après que le stimulus utilisateur ait été envoyé et le réglage de la valeur plus faible en fonction de cet événement.

14. Un système de communication comprenant un réseau sans fil (50) et une pluralité de dispositifs électroniques (10) selon l'une quelconque des Revendications 1 à 9, lesdits dispositifs électroniques (10) étant capables de communiquer par un moyen sans fil avec le réseau sans fil (50).

15. Un support lisible par ordinateur (24, 26) renfermant du code logiciel exécutable par un processeur (38) d'un dispositif électronique (10) pour mettre en oeuvre le procédé selon l'une quelconque des Revendications 10 à 13.
